Europäisches Patentamt

(19) European Patent Office

Office européen des brevets

(11) Veröffentlichungsnummer: **0 151 786**
**B1**

(12) **EUROPÄISCHE PATENTSCHRIFT**

(45) Veröffentlichungstag der Patentschrift:
28.02.90

(51) Int. Cl.⁵: **B 01 J 20/18, F 25 B 35/04**

(21) Anmeldenummer: **84116083.1**

(22) Anmeldetag: **21.12.84**

(54) Zeolithformling mit hoher Wärmeleitung und Verfahren zur Herstellung.

(30) Priorität: 31.12.83 DE 3347700

(43) Veröffentlichungstag der Anmeldung:
21.08.85 Patentblatt 85/34

(45) Bekanntmachung des Hinweises auf die Patenterteilung:
28.02.90 Patentblatt 90/09

(84) Benannte Vertragsstaaten:
AT BE CH FR GB IT LI SE

(56) Entgegenhaltungen:
EP-A-0 095 941
DE-A-1 619 856
GB-A-2 021 435

(73) Patentinhaber: ZEO-TECH Zeolith Technologie GmbH
Gollierstrasse 70
D-8000 München 2 (DE)

(72) Erfinder: Kaubek, Fritz, Dipl.-Ing.
Herbststrasse 14
D-8035 Gauting (DE)
Erfinder: Maier-Laxhuber, Peter, Dr.
Saumweberstrasse 14
D-8000 München 60 (DE)

## Beschreibung

Die Erfindung betrifft einen Formling mit Zeolith nach dem Oberbegriff des Patentanspruchs 1 und Verfahren zu dessen Herstellung.

Zeolithkristalle adsorbieren flüssige und gasförmige Adsorbate unter Wärmeentwicklung. Die freigesetzte Reaktionswärme muß bei der Adsorption aus dem Zeolithkristall abgeleitet und bei der Desorption (Trennung beider Stoffe) wieder zugeführt werden. Die Reaktionskinetik der Ad- und Desorptionsprozesse wird durch eine geringe Wärmeleitung der Zeolithkristalle und durch hohe Druckabfälle des zu- bzw. abströmenden Adsorbates begrenzt.

Der Durchmesser synthetischer Zeolithkristalle ist auf wenige Mikrometer begrenzt. Für technische Sorptionsverfahren sind Pulverschüttungen ungeeignet, da durch Adsorbatströmung die feinen Zeolithkristalle verwirbelt und aus den Reaktionsräumen ausgetragen werden.

Eine Weiterverarbeitung der pulverförmigen Zeolithprodukte in speziellen aber aufwendigen Granulierungsverfahren durch Zugabe von Bindemitteln in Granulate, z. B. kleine Kugeln oder Zylinder, erlaubt den Einsatz der Zeolithe in Trocknungsprozessen. Bei diesen Prozessen durchströmen feuchte Gase Granulatschüttungen und geben die mitgeführte Feuchtigkeit an diese ab. Die trockenen Gase nehmen die dabei entstehende Reaktionswärme auf und kühlen das Granulat. Zur Desorption der Granulatschüttungen werden im darauf folgenden Verfahrensschritt heiße und trockene Gase eingeleitet. Diese übertragen die Reaktionswärme an das Granulat und nehmen die freigesetzte Feuchtigkeit auf. Die Gase umströmen in diesen sogenannten offenen Prozessen jeden Granulatkörper. Für den Wärmeaustausch steht die gesamte Oberfläche der Granulatkörper zur Verfügung.

In mehreren Patentanmeldungen werden Zeolithgranulate für die Adsorption von Wasserdampf in Adsorptionswärmepumpen und -klimaanlagen vorgeschlagen. Die Zeolithkristalle sorbieren dort im geschlossenen Prozeß Wasserdampf. Gasströme, die die Reaktionswärme übertragen könnten, stehen nicht zur Verfügung. Die Wärme muß über spezielle Wärmetauscher von außen zu- und abgeführt werden. Innerhalb der Granulatschüttung kann die Wärme nur über die Berührstellen der Granulate weitergeleitet werden. Die Wärmeübertragung hängt deshalb nicht von der Granulatkörperoberfläche sondern von der Anzahl der Berührungsstellen der Granulate untereinander und gegenüber den Wärmetäuschern ab. Die Wärmeleitung in Schüttungen ist deshalb niedriger als in homogenen Stoffen. Der Strömungswiderstand ist höher als in vergleichbaren Strömungskanälen mit glatten Oberflächen.

Die DE-3 207 656-A1 schlägt Zeolithformlinge vor, die den Wärmetauscheroberflächen angepaßt sind und für das Adsorbat optimal ausgelegte Strömungskanäle enthalten. Bereits nach wenigen Desorptionszyklen lösen sich die Zeolithformlinge von den Wärmetauscheroberflächen. Es entstehen dünne Spalte, die den Wärmeübergang an die Wärmetauscher noch stärker als in Granulatschüttungen einschränken. Stark schwankende Temperatur- und Beladungsgradienten erzeugen auch innerhalb der Formlinge Risse und Spalte, die die Wärmeleitung zusätzlich verringern. Abgesprengte Zeolithteile verstopfen die Strömungskanäle und verhindern den Zutritt des Adsorbates zum Zeolith.

EP-A3-0 095 941 beschreibt Adsorbentien zum Einsatz in Wärmepumpen, die aus Metallgewirk bestehen, in dessen Hohlräumen bzw. Zwischenräumen Zeolith-Pulver eingeschlemmt ist. Der Metallanteil soll dabei zwischen 2 – 13 Massen-% liegen.

Mit dieser Metall-Zeolith-Masse wird eine gute Durchlässigkeit für das vom Zeolith zu adsorbierende Gas geschaffen und gleichzeitig die schlechte Wärmeleitfähigkeit des Zeolith-Pulvers verbessert.

Der Erfindung liegt die Aufgabe zugrunde, bei Formlingen aus Zeolith die innere Wärmeleitung und den Wärmeübergang auf angrenzende Wärmetauscher zu erhöhen und auch unter stark schwankenden Temperatur- und Beladungszuständen dauerhaft zu gewährleisten. Die Strömungswiderstände für die jeweiligen Adsorbate sollen gleichzeitig auf ein Mindestmaß reduziert werden.

Die gestellte Aufgabe wird durch den kennzeichnenden Teil des Anspruchs 1 gelöst.

Das Metallgewirk verhindert ein Zerspringen und Zerfallen der Zeolithformlinge und erhöht gleichzeitig die Wärmeleitung im Formling. Die geringe Wärmeleitfähigkeit der Zeolithsubstanz wird durch gute Wärmeleitfähigkeiten der Metallstrukturen stark verbessert. Besonders hohe Sorptionsgeschwindigkeiten lassen sich durch ein dichtes Metallgewirk aus Gold, Silber, Kupfer, Aluminium etc. und durch eine flache Bauweise der Formlinge erzielen.

Um den Adsorbaten einen möglichst ungehinderten Zugang zu den Zeolithkristallen zu gewähren, sind innerhalb des Formlings bestimmte Bereiche nicht mit Zeolithmasse ausgefüllt. Besonders vorteilhaft ist es, wenn auch die Außenzonen des Metallgewirks nicht mit Zeolith belegt sind. Ein Absprengen kleiner Zeolithstücke und ein Verstopfen der Strömungskanäle kann dadurch wirksam verhindert werden.

Besonders feinmaschige Metallgewirke halten auch Zeolithpulver, das nicht oder nur mit wenig Bindemittel verfestigt ist, in den Metallmaschen zurück. Niedrige Bindemittelanteile sind für hohe Wärmeverhältnisse vorteilhaft. Patentanspruch 4 sieht vor, den Bindemittelgehalt im Innenbereich der Formlinge niedriger zu halten als in den Randzonen. Die äußeren, durch Erosion stark gefährdeten Bereiche erhalten dann einen höheren Anteil an Bindemittel als die weniger beanspruchten Innenbereiche.

Als Metallgewirke eignen sich feinmaschige Metallstrukturen wie Stahlwolle, Metallgewebe, Metallspäne und Metallfaservliese. Besonders vorteilhaft erwiesen sich metallische Filtermaterialien wie RETIMET® oder BEKIPOR®. Diese Handelsprodukte besitzen durch starke Vernetzungen der Metallstruktur sehr gute Wärmeleitungs- und Rückhalteeigenschaften.

Ein Absprengen der Formlinge von den Wärmetauscheroberflächen wird nach der Lehre des Anspruchs 6 dadurch verhindert, daß das Metallgewirk durch eine dauerhafte Verbindung an den Wärmetauscheroberflächen haftet. Unterschiedliche Wärmeausdehnungen zwischen dem Metallgewirk und den Zeolithkristallen werden durch die Elastizität der Metallstruktur kompensiert.

Zum Herstellen der Metallverbindungen eignen sich Techniken wie Sintern, Schweißen, Verzinken und Verzinnen. Verlöten u.a. Mit Hilfe dieser Verbindungstechniken erreicht man nicht nur eine dauerhafte und gut Wärmeleitende Kopplung der Metallstruktur an die Wärmetauscheroberflächen, sondern auch die innere Vernetzung der Metallstruktur an den Kreuzungspunkten des Gewirkes.

Zur Herstellung der Formlinge wird eine fließfähige Zeolithmischung aus Zeolithpulver, Wasser und Bindemittel in das Metallgewirk eingeleitet bzw. das Metallgewirk in die fließfähige Zeolithmischung getaucht. Eingeschlossene Hohlräume können durch hochfrequentes Rütteln am Metallgewirk aufgefüllt werden. Durch vorsichtiges Trocknen bei Temperaturen unterhalb 100°C verdunstet das überschüssige Wasser aus der Zeolithmischung. Die verbleibenden Zeolithkristalle verbinden sich mit dem Metallgewirk und den beigemischten Bindemitteln zu festen, stabilen Formlingen.

Die nicht mit Zeolithmischung auszufüllenden Außenbereiche der Metallstruktur werden vorteilhafterweise mit Wasser gefüllt, das anschließend gefroren wird.

Beim Trocknungsvorgang schmilzt das Eis ab und das Wasser verdunstet. Zurück bleiben Strömungskanäle für die Adsorbate. Da die Kanäle mit Metallgewirk gefüllt sind, können auch hier keine Zeolithteile absprengen und die Kanäle blockieren. Strömungskanäle innerhalb der Formlinge lassen sich von Zeolith dadurch freihalten, daß in einem ersten Arbeitsschritt das Metallgewirk aus den Strömungskanälen entfernt oder verdrängt wird und in einem weiteren Arbeitsschritt die Strömungskanäle mit passenden Eisstücken, in die Metallgewirke eingefroren sind, ausgefüllt werden. Die auf diese Weise vorbereitete Metallstruktur kann anschließend mit der fließfähigen Zeolithmischung gefüllt werden. Die Strömungskanäle sind nach dem Abschmelzen der Eisstücke für die Strömung der Adsorbate frei.

In einem weiteren Verfahren werden Strömungskanäle dadurch erzeugt, daß nach dem Füllen mit fließfähiger Zeolithmischung die Metallstruktur verformt wird. Hierzu eignen sich mit Vorteil Preß- oder Walzwerkzeuge, welche die Strömungskanäle in den noch weichen Formling einpressen. Mit diesem Verfahren entstehen in den Übergangszonen vom Formling zu den Strömungskanälen Verdichtungen des Metallgewirks. Die Wände der Strömungskanäle werden damit so stabil, daß eine zusätzliche, nachträgliche Auskleidung der Strömungskanäle mit Metallgewirk teilweise unterbleiben kann. Das Preßwerkzeug verbleibt solange im Formling bis dieser zumindest teilweise erstarrt ist und die freigepreßten Kanäle mit Zeolithmischung nicht mehr vollaufen können. Der Erstarrungsvorgang kann beschleunigt werden, wenn das Preßwerkzeug beheizt wird. Aus der vom heißen Preßwerkzeug kontaktierten Zeolithmischung verdampft das Wasser. Es entsteht eine dünne Schicht aus erstarrtem Zeolith. Ein Eindringen noch fließfähiger Zeolithmischung wird dadurch nach Entfernen des Preßwerkzeuges verhindert.

Ein Ausführungsbeispiel der Erfindung ist in der Zeichnung dargestellt und wird im folgenden näher beschrieben. Es zeigt

Fig. 1    einen Wärmetauscher mit Formling aus Zeolith (1) zwischen den Wärmetauscherplatten (2),

Fig. 2    einen Formling aus Zeolith (1) auf einer Wärmetauscherplatte (2) mit eingepreßten Strömungskanälen (4).

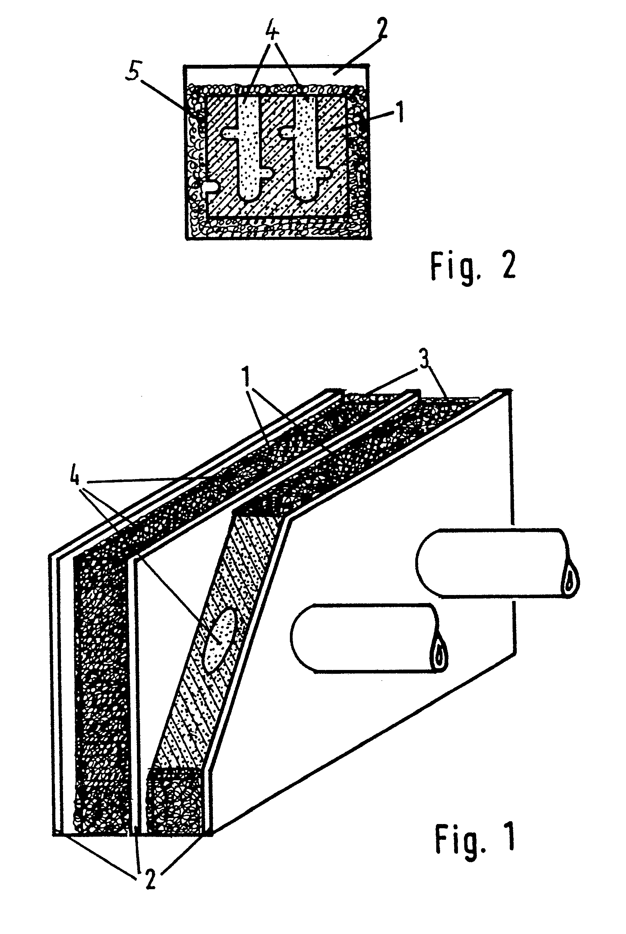

In Figur 1 ist ein Abschnitt eines Lamellenwärmetauschers dargestellt. Zwischen den Wärmetauscherplatten (2) befinden sich die Formlinge aus Zeolith (1). Die Metallgewirke (3) sind durch Widerstandsschweißverfahren mit den Wärmetauscherplatten (2) gut wärmeleitend verbunden. Die Formlinge (1) enthalten Bereiche, die nicht mit Zeolith ausgefüllt sind. Die Strömungskanäle (4) gestatten den Adsorbaten den schnellen Zutritt zu den Zeolithkristallen.

Die Figur 2 zeigt als Ausführungsbeispiel einen Formling (1) aus Zeolith auf einer Wärmetauscherplatte (2). Die Außenbereiche (5) der Metallstruktur sind durch eine Auskleidung aus Eis von Zeolith freigehalten worden. Die Strömungskanäle (4) auf der oberen Seite des Formlings sind durch Preßwerkzeuge eingearbeitet worden. Die Kanäle sind nicht mit Metallgewirk ausgekleidet.

## Patentansprüche

1. Zeolithformling für die Adsorption eines Adsorbates in Zeolith-Kristallen, die in die Zwischenräume bzw. Poren eines Metallgewirkes (3) eingebettet sind, *dadurch gekennzeichnet*, daß den Zeolith-Kristallen zur Verfestigung ein Bindemittel beigemischt ist, daß der Zeolithformling mindestens einen Strömungskanal (4) für den freien Zutritt eines Adsorbates enthält und daß der Strömungskanal (4) mit einem feinmaschigen Metallgewirk (3) ausgefüllt ist oder der Strömungskanal (4) frei von feinmaschigem Metallgewirk (3) ist, wobei die Übergangszone vom Zeolithformling zu dem Strömungskanal (4) mit Metallgewirk (3) verdichtet ist.

2. Zeolithformling nach Anspruch 1, *dadurch gekennzeichnet*, daß der Strömungskanal (4) mit einem feinmaschigen Metallgewirk (3) ausgefüllt ist.

3. Zeolithformling nach Anspruch 1 oder 2, *dadurch gekennzeichnet*, daß der Zeolithformling in Außenbereichen (5) mit zeolithmaterialfreiem Metallgewirk (3) umgeben ist.

4. Zeolithformling nach einem der vorangehenden Ansprüche, *dadurch gekennzeichnet*, daß die Konzentration des Bindemittels im Innern des Zeolithformlings niedriger ist, als in den Randzonen.

5. Zeolithformling nach einem der vorangehenden Ansprüche, *dadurch gekennzeichnet*, daß das Metallgewirk (3) Stahlwolle und/oder Stahlgewebe enthält.

6. Zeolithformling nach einem der vorangehenden Ansprüche, *dadurch gekennzeichnet*, daß das Metallgewirk (3) gut wärmeleitend mit einer Wärmetauscherfläche (2) verbunden ist.

7. Verfahren zur Herstellung eines Zeolithformlings nach Anspruch 1, *dadurch gekennzeichnet*, daß Zeolithkristalle durch Zugabe von Bindemittel und Wasser zu einer fließfähigen Mischung verarbeitet werden, daß die fließfähige Mischung in das Metallgewirk gefüllt wird und daß der Zeolithformling anschließend bei Temperaturen unter 100°C zu einem festen Formling getrocknet wird.

8. Verfahren nach Anspruch 7, *dadurch gekennzeichnet*, daß die nicht mit Zeolithmischung auszufüllenden Strömungskanäle durch gefrorene Wasserstrukturen belegt sind.

9. Verfahren nach Anspruch 7, *dadurch gekennzeichnet*, daß vor der Aushärtung der Zeolithmischung Präge- oder Walzwerkzeuge Strömungskanäle in den Zeolithformling einarbeiten.

10. Verfahren nach Anspruch 9, *dadurch gekennzeichnet*, daß das Präge- oder Walzwerkzeug über 100°C heiß ist.

**Claims**

1. A zeolite briquette for the adsorption of an adsorbate in zeolite crystals which are embedded in the interspaces and pores of a metal fabric (3), characterised in that a bonding agent is mixed with the zeolite crystals for solidification, that the zeolite briquette contains at least one flow channel (4) for the free admission of an adsorbate and that the flow channel (4) is filled with a fine-meshed metal fabric (3) or the flow channel (4) is free of fine-meshed metal fabric (3), the transition zone from the zeolite briquette to the flow channel (4) being sealed with metal fabric (3).

2. A zeolite briquette as claimed in claim 1, characterised in that the flow channel (4) is filled with a fine-meshed metal fabric (3).

3. A zeolite briquette as claimed in claim 1 or claim 2, characterised in that in outer zones (5) the zeolite briquette is surrounded by metal fabric (3) which is free of zeolite material.

4. A zeolite briquette as claimed in one of the preceding claims, characterised in that the concentration of the bonding agent is lower in the interior of the zeolite briquette than in the edge zones.

5. A zeolite briquette as claimed in one of the preceding claims, characterised in that the metal fabric (3) contains steel wool and/or steel cloth.

6. A zeolite briquette as claimed in one of the preceding claims, characterised in that the metal fabric (3) is connected to a heat exchanger surface (2) so as to be highly thermally conductive.

7. A process for the production of a zeolite briquette as claimed in claim 1, characterised in that zeolite crystals are processed to form a free-flowing mixture by the addition of bonding agent and water, that the free-flowing mixture is poured into the metal fabric and that the zeolite briquette is then dried to form a solid briquette at temperatures below 100°C.

8. A process as claimed in claim 7, characterised in that the flow channels which are not be filled with zeolite mixture are lined with frozen water structures.

9. A process as claimed in claim 7, characterised in that prior to the hardening of the zeolite mixture, stamping or rolling tools form flow channels in the zeolite briquette.

10. A process as claimed in claim 9, characterised in that the stamping or rolling tool is heated to above 100°C.

**Revendications**

1. Pièce façonnée de zéolite pour l'adsorption d'un adsorbat dans des cristaux de zéolites qui sont introduits dans les mailles ou les pores d'une toile métallique (3), caractérisée en ce que, un liant est mélangé aux cristaux de zéolite pour la consolidation, la pièce façonnée de zéolite comporte au moins un canal d'écoulement (4) pour le libre accès d'un adsorbat, et le canal d'écoulement (4) est comblé avec une toile métallique (3) à mailles fines, ou le canal d'écoulement (4) est dépourvu de toile métallique (3) à mailles fines, la zone de transition de la pièce façonnée de zéolite au canal d'écoulement (4) étant rendue étanche par une toile métallique (3).

2. Pièce façonnée de zéolite suivant la revendication 1, caractérisée en ce que, le canal d'écoulement (4) est comblé avec une toile métallique (3) à mailles fines.

3. Pièce façonnée de zéolite suivant la revendication 1 ou 2, caractérisée en ce que, la pièce façonnée de zéolite est entourée, dans les parties extérieures (5), d'une toile métallique (3) dépourvue de matériau en zéolite.

4. Pièce façonnée en zéolite suivant l'une des revendications précédentes, caractérisée en ce que, la concentration du liant, à l'intérieur de la pièce façonnée de zéolite, est plus petite que dans les zones marginales.

5. Pièce façonnée de zéolite suivant l'une des revendications précédentes, caractérisée en ce que, la toile métallique (3) contient de la paille de fer et/ou de la toile d'acier.

6. Pièce façonnée de zéolite suivant l'une des revendications précédentes, caractérisée en ce que, la toile métallique (3) est reliée d'une manière conduisant bien la chaleur à une surface d'un échangeur de chaleur (2).

7. Procédé de fabrication d'une pièce façonnée de zéolite suivant la revendication 1, caractérisé en ce qu'il consiste, à transformer des cristaux de zéolite, par addition de liant et d'eau, en un mélange susceptible de s'écouler, à garnir la toile métallique du mélange susceptible de s'écouler, et à sécher ensuite la pièce façonnée de zéolite à des températures inférieures à 100°C en une pièce façonnée solide.

8. Procédé suivant la revendication 7, caractérisé en ce qu'il consiste, à recouvrir les canaux d'écoulement, qui ne doivent pas être garnis de mélange de zéolites, de structures aqueuses gelées.

9. Procédé suivant la revendication 7, caractérisé en ce qu'il consiste, à ménager, avant le durcissement du mélange de zéolites, à l'aide d'outils de gravure ou de laminage, des canaux d'écoulement dans la pièce façonnée de zéolite.

10. Procédé suivant la revendication 9, caractérisé en ce qu'il consiste, à chauffer l'outil de gravure ou de laminage à une température supérieure à 100°C.

Fig. 2

Fig. 1